# EUROPEAN PATENT APPLICATION

(11) **EP 2 101 472 A1**
(43) Date of publication of application: **16.09.2009**
(21) Application number: 08250869.8
(22) Date of filing: 14.03.2008
(51) Int. Cl.: H04L 29/08, H04W 4/02, G01S 5/00

(54) **Apparatus and method for processing position information**

(71) Applicant: Mobinnova Corp, Taoyuan City, Taoyuan County 330 (TW)
(72) Inventor: Chiu, Kai-Feng, Taoyuan City Taoyuan County 330 (TW)
(74) Representative: Cheyne, John Robert Alexander M.

(57) **Abstract**

An apparatus and a method process position information. A mobile phone (100A) sends a first position signal for itself through an RF module and receives a second position signal for other party (100B) through the RF module. Therefore, the positions of users using the mobile phones can be simultaneously shown on display of the mobile phone. Moreover, a GPS destination point can be set with reference to the second position signal for other party, and an optimal path can be dynamically programmed according to the GPS destination point. The position signal can be sent through a composite voice signal after it is combined with a voice signal; or the position signal can be sent through short message service (SMS).

## Description

### BACKGROUND OF THE INVENTION

### 1. Field of the Invention

The present invention relates to an apparatus and a method for processing position information, more particularly to an apparatus and a method applied to a mobile phone, whereby users using the mobile phone can know the locations for each other.

### 2. Description of Prior Art

Global Positioning System (GPS) is originally developed by US army for satellite navigation. GPS is also gradually applied to industrial survey and research application. Moreover, GPS is also popular for personal application for recreational or business travel.

The electronic components are miniature as progress of technology, and compacted electronic components can be used for portable electronic devices such as mobile phone, personal digital assistant (PDA) and laptop computer. Therefore, tourist or business traveler has more convenient access to GPS service.

The commercially available GPS device (with map or navigation function) provides only positioning function for its user receiving the GPS position signal. Namely, user sets a destination point and then updates the position thereof by receiving position signal through GPS chip and GPS receiver. The user of GPS device also interchanges data with base station through baseband and RF module.

However, in prior art GPS device, there is only one way navigation service for user. The destination point is a fixed location and the start point is the location of user. An optical path is programmed by linking the destination point and the start point of user. This navigation can be realized only after the destination point is known.

It is desirable to provide apparatus and method for processing position information in interactive way. Two users using the apparatus for processing position information in interactive way can automatically know the locations for each other. Moreover, the optimal path can be automatically and dynamically programmed based on the updated locations.

### SUMMARY OF THE INVENTION

It is the object of the present invention to provide an apparatus and a method applied to a mobile electronic device, whereby users using the mobile electronic device can know the locations for each other.

Accordingly, the present invention provides an apparatus and a method for processing position information. A mobile phone sends a first position signal for itself through an RF module and receives a second position signal for other party through the RF module. Therefore, the positions of users using the mobile phones can be simultaneously shown on display of the mobile phone. Moreover, a GPS destination point can be set with reference to the second position signal for other party, and an optimal path can be dynamically programmed according to the GPS destination point. The position signal can be sent through a composite voice signal after it is combined with a voice signal; or the position signal can be sent through short message service (SMS).

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 is a schematic view showing the application of the apparatus for processing position information according to the present invention.
Fig. 2 shows the block diagram of the apparatus 10 for processing position information according to the present invention.
Fig. 3A and Fig. 3B show the circuit diagrams for circuits sending and receiving the position signal, respectively, through voice signal.
Fig. 4 shows the synthesis of voice signal Sv and position signal Sg.
Fig. 5 is a schematic view showing the operation according to a working example of the present invention.
Fig. 6 is a flowchart explaining the method of the present invention.

### DETAILED DESCRIPTION OF THE INVENTION

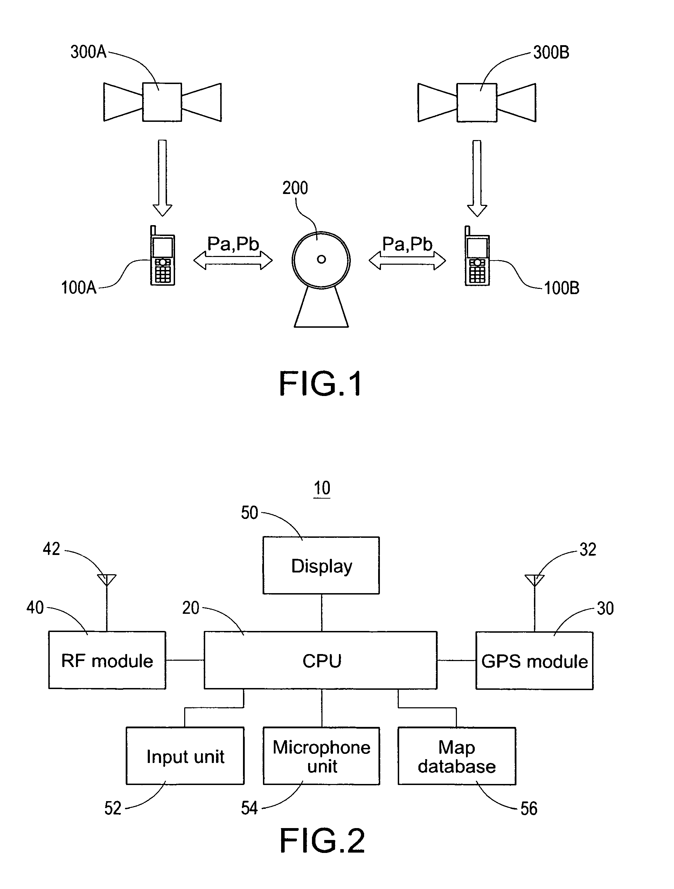

Fig. 1 is a schematic view showing the application of the apparatus for processing position information according to the present invention. Portable electronic devices 100A and 100B (such as mobile phone) are equipped with apparatus for processing position information according to the present. The portable electronic devices 100A and 100B receive GPS digital position signal for themselves from satellites 300A and 300B, and then send their position signal (position information) Pa and Pb to other parties, respectively. The locations corresponding to the position signal Pa and Pb are shown on displays of the portable electronic devices 100A and 100B for manifesting the positions of two parties using the portable electronic devices 100A and 100B. It should be noted that the scenario shown in Fig. 1 is for demonstration, and more satellites are necessary for GPS service. The portable electronic devices 100A and 100B can also be PDAs, smart phones or vehicle navigation devices:

Fig. 2 shows the block diagram of the apparatus 10 for processing position information according to the present invention. The apparatus 10 for processing position information mainly comprises a central processing unit (CPU) 20, a GPS module 30, an RF module 40, a display 50, an input unit 52, a microphone unit 54 and a map database 56, wherein the CPU 20 is electrically connected to all other components. The GPS module 30 is further connected to a GPS antenna 32 to transceive GPS signal, and the RF module 40 is further connected to an RF antenna 42 to transceive RF signal.

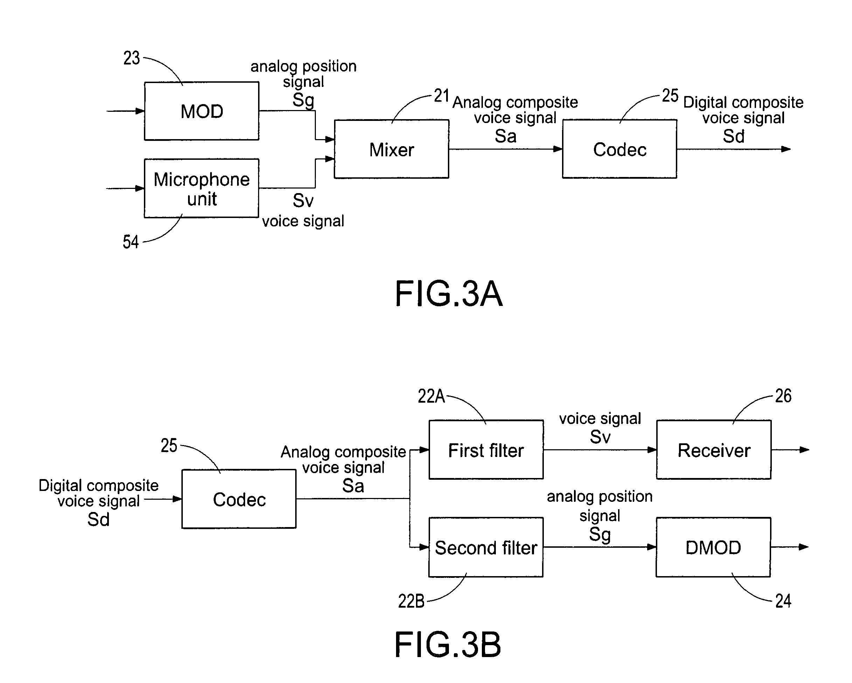

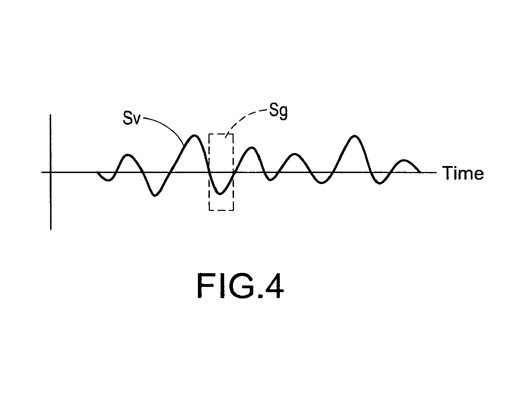

According to a preferred embodiment of the present invention, the position signal can be sent with voice signal of mobile phone. Fig. 3A and Fig. 3B show the circuit diagrams for circuits sending and receiving the position signal, respectively, through voice signal. With reference to Fig. 3A, the apparatus 10 comprises circuit for sending position signal with voice signal and the circuit comprises a mixer 21, a modulator (MOD) 23 eclectically connected to the mixer 21 and a codec 25 eclectically connected to the mixer 21. The MOD 23 receives a digital position signal from the GPS module 30 and converts the digital position signal into an analog position signal Sg. The mixer 21 mixes the analog position signal Sg and a voice signal Sv to form an analog composite voice signal Sa. With reference to Fig. 4, the voice signal Sv generally occupies frequency regime of 300Hz-3400Hz (voice band). Therefore, the MOD 23 modulates the position signal with a modulating frequency outside the frequency regime of 300Hz-3400Hz. Therefore, the analog composite voice signal Sa contains the analog position signal Sg and the voice signal Sv, wherein the analog position signal Sg and the voice signal Sv occupy different frequency regimes. The codec 25 converts the analog composite voice signal Sa into a digital composite voice signal Sd for transmitting through the RF module 40.

With reference to Fig. 3B, the apparatus 10 further comprises circuit for receiving the digital composite voice signal Sd from another party. The circuit for receiving the digital composite voice signal Sd comprises a codec 25, a first filter 22A and a second filter 22B, both electrically connected to the codec 25, and a receiver 26 electrically connected to the first filter 22A, and a demodulator (DMOD) 24 electrically connected to the second filter 22B. The first filter 22A is a band pass filter corresponding to the frequency band of the voice signal Sv. The second filter 22B is also a band pass filter corresponding to the frequency band (outside the voice band) of the analog position signal Sg. After the codec 25 converts the digital composite voice signal Sd into an analog composite voice signal Sa, the first filter 22A extracts the voice signal Sv from the analog composite voice signal Sa and sends the voice signal Sv to the receiver 26. The second filter 22B extracts the analog position signal Sg from the analog composite voice signal Sa and sends the analog position signal Sg to the DMOD 24 for converting into digital position signal. The digital position signal is processed by the CPU 20 and map corresponding to the digital position signal is fetched from the map database 56. Therefore, locations corresponding to the portable electronic devices 100A and 100B are shown on the display 50.

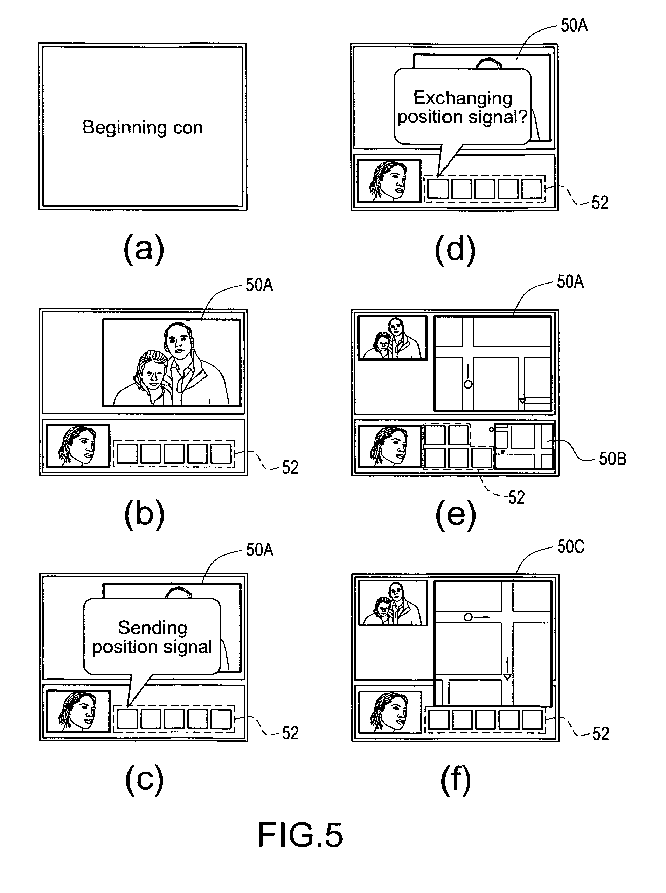

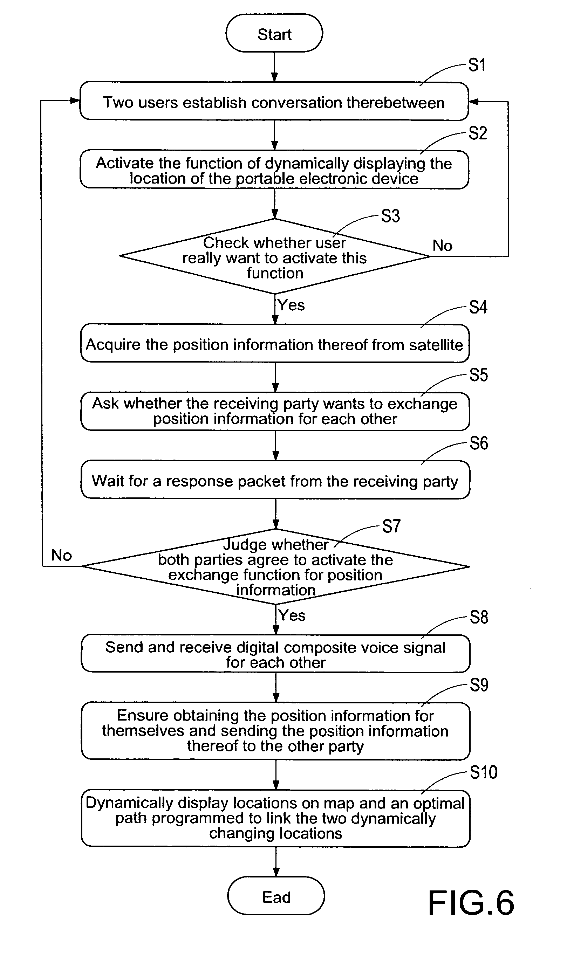

With reference to Figs. 5 and 6, method for processing position information according to a preferred embodiment is demonstrated. Two or more users using portable electronic device 100A and 100B equipped with the apparatus 10 can exchange position information automatically.

With reference to Fig. 6 and Figs. 5a and 5b, two users first establish conversation therebetween (S1). After the conversation is established, any one of the users can activate the function of dynamically displaying the location of the portable electronic device 100A (100B) in step S2. The activation operation can be performed, for example, by pressing physical key or a virtual key of touch panel (corresponding to numeral 52). An inquiring window is popped out (S3) by the portable electronic device 100A (100B) to checks whether user really want to activate this function, or just erroneously presses the key 52. If the user doesn't want to activate the function of sending location information, the procedure is back to step S 1. Otherwise, the GPS module 30 in the apparatus 10 sends signal for acquiring the position information thereof from satellite in step S4 (with reference also to Fig. 5c).

With reference to Fig. 5d, one of the users (the sending party) sends a request to the other one of the users (the receiving party) to ask whether the receiving party wants to exchange position information for each other in step S5, and the portable electronic device 100A (100B) pops out a window, which manifests waiting for a response packet from the receiving party (step S6). Once the sending party receives the response packet with confirmative reply, the portable electronic device 100A (100B) judges whether both parties agree to activate the exchange function for position information (step S7). When at least one party disagrees the exchange function for position information, the procedure is back to step S 1. Otherwise, the portable electronic device 100A (100B) adds the position information thereof into a digital composite voice signal and sends the digital composite voice signal to the other party. Namely the portable electronic device 100A (100B) sends and receives digital composite voice signal for each other (step S8). After both parties have successfully obtained the position information for themselves and sent the position information thereof to the other party (Step S9), the locations on map are dynamically displayed on the display 50 of the portable electronic device 100A (100B) and an optimal path can be programmed to link the two dynamically changing locations of the portable electronic device 100A (100B) in step S10. The optimal path can be continuously updated as long as the electronic devices 100A and 100B keep exchanging position information.

With reference to Fig. 5e, a major display window 50A of the display 50 in the portable electronic device 100A (100B) displays map location for the other party; while a sub display window 50B of the display 50 in the portable electronic device 100A (100B) displays map location for itself. The CPU 20 refers to the data in the map database 56 to program an optimal path in view of the position information of both parties. In other word, the CPU 20 can exploit the existing navigation function and sets the location of the other party as a destination point. The optimal path is indicated by arrow shown in Fig. 5e and can dynamically updated as long as the electronic devices 100A and 100B keep exchanging position information. Moreover, as shown in Fig. 5f, the major display window 50A and the sub display window 50B can be merged into a combined window 50C when the distance between the two parties are close enough (for example within 1 km).

Moreover, to save the conversation cost, the apparatus 10 can send position information through short message service (SMS) instead of voice signal. More particularly, the CPU 20 edits the position information thereof into a position information message and sends the position information message to the other party through an SMS center (SMSC). Moreover, the CPU 20 can also process the position information message from other parties to obtain the position information of other parties. In above scheme, two parties using the apparatus 10 can still exchange position information without keeping conversation through mobile phone (in case that the portable electronic device is mobile phone). In the preferred embodiment, the position information message is also a composite signal (because the position information is contained in short message) and contains position information. The composite signal is also sent through RF module 40, similar to the transmission way of the digital composite voice signal Sd.

## Claims

1. An apparatus for processing position information, comprising:
a central processing unit (CPU) (20);
a global positioning system (GPS) module (30) electrically connected to the CPU (20) and receives a digital position signal;
a radio frequency (RF) module (40) electrically connected to the CPU (20);
a modulator (23) operatively coupled to the GPS module and modulating the digital position signal into an analog position signal (Sg), wherein the modulator (23) uses a modulating frequency outside a voice frequency band;
a mixer (21) electrically connected to the modulator (23) and mixing the analog position signal (Sg) with an analog voice signal (Sv) to form an analog composite voice signal (Sa); and
a codec (25) electrically connected to the mixer (21) and encoding the analog composite voice signal (Sa) into a digital composite voice signal (Sd),
wherein the RF module (40) sends the digital composite voice signal (Sd) to inform a location of the apparatus for processing position information.

2. The apparatus in claim 1, further comprising:
a first filter (22A) electrically connected to the codec (25); and
a second filter (22B) electrically connected to the codec (25) and extracting the analog position signal (Sg) from the analog composite voice signal (Sa) with reference to the modulating frequency.

3. The apparatus in claim 1, further comprising:
a map database (56) electrically connected to the CPU (20) and providing a location map corresponding to the location.

4. The apparatus in claim 3, further comprising:
a display (50) electrically connected to the CPU (20) and showing the location map.

5. The apparatus in claim 4, wherein the location for the location map is based on the digital position signal (Sd) from the GPS module (30).

6. The apparatus in claim 4, wherein the location for the location map is based on a digital position signal from other party, which is received from the RF module (40).

7. The apparatus in claim 1, wherein the voice frequency band is ranged from 300Hz to 3400Hz.

8. The apparatus in claim 2, wherein the first filter (22A) is a band pass filter with passing band ranged from 300Hz to 3400Hz to extract the voice signal from the analog composite voice signal.

9. A method for processing position information, comprising:
a) providing a global positioning system (GPS) module (30) to receive a digital position signal for itself;
b) providing a radio frequency (RF) module (40) to receive a composite signal containing a digital position signal of other party; and
c) showing a location corresponding to the digital position signal of other party on a display (50).

10. The method in claim 9, further comprising:
in step c) showing a location corresponding to the digital position signal for itself on the display (50).

11. The method in claim 9, further comprising:
editing the digital position signal for itself into a position information message; and
sending the position information message through an SMS center (SMSC) for mobile phone.

12. The method in claim 11, wherein the composite signal is the position information message.

13. The method in claim 9, further comprising:
combining the digital position signal with a voice signal into a digital composite voice signal; and
sending the digital composite voice signal through the RF module (40).

14. The method in claim 13, wherein the composite signal is the digital composite voice signal (Sd).

15. The method in claim 9, further comprising:
confirming to receive an acknowledgement signal from the other party before step b).

16. The method in claim 9, further comprising:
setting a location corresponding the digital position signal of other party as a designation point; and
programming an optimal path linking the location corresponding the digital position signal of other party and a location corresponding the digital position signal for itself.

17. The method in claim 16, further comprising:
updating the location of other party by continuously receiving the digital position signal of other party; and
dynamically programming the optimal path according to the updated location of other party.
